# EUROPEAN PATENT APPLICATION

(11) **EP 2 067 753 A1**
(43) Date of publication of application: **10.06.2009**
(21) Application number: 07368012.6
(22) Date of filing: 03.12.2007
(51) Int. Cl.: C04B 20/10, C04B 28/02

(54) **Concrete Mix**

(71) Applicant: Lafarge SA, F-75116 PARIS (FR)
(72) Inventor: Gartner, Ellis, 69003 Lyon (FR); Serre, Florence, 38460 Moras (FR); Morin, Vincent, 69003 Lyon (FR); Dubois-Brugger, Isabelle, 69680 Chassieu (FR)
(74) Representative: Mérigeault, Shona

(57) **Abstract**

A concrete mix comprising hydraulic cementitious material, aggregates and water, wherein at least a portion of the aggregates in the total mix is coated externally with a well-bonded polymer layer of at least 1 µm in average thickness, said layer comprising a polymer having a high elongation and high energy-absorption capacity at the temperatures at which the concrete is designed to be used.

## Description

### Field of Invention

The present invention relates to a concrete with improved toughness obtained by means of a bonded polymer layer at the interface between the cement paste and a significant fraction of the coarse aggregates.

Fresh concrete generally comprises in the region of 5-10% water, 5-20% cement and 60-90% aggregates by weight. By volume, it is typically 10-30% cement paste, the term "cement paste" being conventionally used to describe simply the combination of water and cementitious materials, i.e. that part of the concrete which is too fine to be considered "aggregate" and, after the hydration reaction or other similar reactions which cause hardening, serves as the binder or matrix component of the hardened concrete. Both fine and coarse aggregates can be added to the cement paste to make up the bulk of the fresh concrete mixture. Sands, natural gravels and crushed stones are examples of commonly used aggregates. However, it has become increasingly common for recycled aggregates (such as from construction, demolition and excavation waste) to be used as partial replacements of natural aggregates, whilst a number of manufactured aggregates, including crushed air-cooled blast furnace slag, and furnace bottom ashes, can also be utilised. The final workability or consistency of the fresh concrete mix is affected by a number of factors such as the water content of the mix, the amount of cement paste in the overall mix and the physical characteristics, such as size, shape and grading of the aggregates, as well as the presence of chemical additives. In practice, the initial water/cement ratio is usually the main factor determining the ultimate strength of the hardened concrete. A lower water/cement ratio will generally yield a concrete which is stronger and more durable, whilst, all other variables being fixed, a higher water/cement ratio yields a concrete with a larger "slump" (better workability), so it may be placed and compacted more easily.

The compacted mixture of cement paste and aggregates is cast into a mould, or otherwise formed into the desired shape, and allowed to set and harden. After a suitable curing time, the product is demoulded, constituting the "hardened concrete". Further moist curing is usually desirable even after demoulding, as the cement continues to hydrate and the strength of the concrete continues to increase for days and even months.

Recently the use of artificial lightweight aggregates has been investigated for use in lightweight concretes. However, such aggregates have been found to have the disadvantage that they have high water absorptions due to their generally porous nature and therefore absorb water during the mixing of the concrete. US 4,873,145 considers solutions to this problem by providing a three layer coated aggregate wherein the intermediate coating can be an elastomer like rubber which provides a stress dampening function and wherein the outer coating prevents water absorption. On the other hand WO2006/027363 describes coating basic concrete material, such as cement, with a concrete fluidizer such as a polycarboxylate material, and also the use of elastomeric fibres to improve stress resistance.

In conventional concrete mixes, which use standard/normal weight aggregates (i.e. not lightweight aggregates), the paste-aggregate interface has been found to be a zone of weakness. When the concrete is stressed, cracks readily form and propagate in this interfacial zone. However, the passage of a crack through this interfacial zone (i.e. around the aggregate) actually helps to increase the energy of fracture of the concrete as a whole, which in turn substantially reduces the brittleness of the concrete. In conventional concretes, the energy absorption during cracking is largely due to friction at the paste-aggregate interface. But it has been found that increasing paste strength to make concrete "high-strength" does not usually improve this situation, because it also leads to an increased paste-aggregate bond which in fact tends to increase the brittleness of the concrete by increasing the tendency of the cracks to take the shortest path, which means passing through the aggregates (which are themselves almost always very brittle materials), thereby reducing (in relative terms) the energy absorbed as the concrete cracks. Thus, neither increasing the bond between the paste and the aggregate, nor increasing the strength of the paste matrix, are good ways of reducing the tendency of concrete to crack.

### Object of the Invention

An object of the present invention is to provide a standard weight concrete with improved toughness by means of a bonded polymer layer at the interface between the cement paste and a significant fraction of the coarse aggregates. The polymer layer improves the energy-absorbing properties of these interfaces, thereby resulting in a reduction in visible concrete cracking. In this respect, it should be noted that large, visible cracks are both unsightly and potentially damaging to the strength and durability of the concrete, whereas widely dispersed invisible microcracks are not necessarily harmful.

### Summary of Invention

According to the present invention there is provided a concrete mix comprising hydraulic cementitious material, aggregates and water, in which at least a portion of the aggregates in the total mix are coated externally with a well-bonded polymer layer of at least 1 µm in thickness, said layer comprising a polymer with a high elongation and high energy-absorption capacity at the temperatures at which the concrete is designed to be used.

Well-bonded is intended to mean that the strength of the bond between the polymer and the cement paste, and also between the polymer and the aggregate, is greater than 60%, and preferably greater than 80%, of the tensile strength of the polymer itself.

The preferred range of polymer coating thickness on the coated aggregates is from 1 to 500 µm but the most preferred is 10-100 µm.

The term cementitious material, in accordance with the present invention, is material which comprises fine inorganic powders which have the capacity to react in the presence of water to form a solid binding phase. Such material includes Portland cement and also blends thereof with supplementary cementitious materials such as granulated blast-furnace slags, fly ashes, pozzolans and limestones. It may also include non-Portland hydraulic cements such as pozzolan-lime cements, supersulfated slag cements, slag-lime cements, calcium aluminate cements, calcium sulfoaluminate cements, magnesium phosphate cements, calcium phosphate cements, magnesium oxide cements, and gypsum plasters. In addition, alkali-activated inorganic binders, e.g. "geopolymers", may be used.

The aggregates may be selected from the group consisting of sand, gravel, crushed stone and the like. It may also include recycled aggregates from old concrete.

Additionally, other conventional chemical admixtures or additives, in the form of powders or liquids, may also be added to the concrete mix as necessary and can include plasticizers, superplasticizers, accelerators, retarders, air-entrainers, pigments, corrosion inhibitors, bonding agents, pumping aids and the like. They are usually added at the time of mixing the concrete and generally in an amount of less than about 5% of the mass of cement.

The range of aggregate sizes to be coated, and the mass fraction of aggregate to be coated, depend on the top size of the aggregates to be used in the concrete in question, and usually represent a significant percentage of the coarsest fraction of these aggregates. They preferably represent at least 30% of the aggregates with effective diameters (or sieve sizes) that are above 50% of the maximum aggregate diameter, and even more preferably, at least 50% of those aggregates with effective diameters (or sieve sizes) larger than 75% of the maximum effective aggregate diameter.

Advantageously the polymer used as the coating or basis for the coating is a water-dispersible polymer, such as a latex, or a rubber and/or constituents thereof, being natural or synthetic. However, any polymer may be used, provided that it has the desired elongation and energy-absorbing properties, and is capable of forming a good bond to both the aggregate and the cement paste matrix, on its own or when formulated with additional bonding agents.

Additional components may also be included in the polymer coating, such as cross-linking agents, coupling agents for the purpose of improving the bond between the polymer coating and the aggregate, or between the polymer coating and the hardened cement paste; and plasticizing agents for improving the energy-absorbing properties of the polymer during deformation in the desired temperature range.

Means for further reinforcing the concrete may be included in the mix, such as short fibres of, for example, steel, glass, synthetic or natural materials. These additives are well known in the art.

The coating of the aggregates with the polymer can be by a pre-treatment process in which the aggregate is coated at a separate plant, or alternatively at the initial stage of concrete mixing, etc.

The invention is also directed to the use of the above described coated aggregates in the production of concrete.

The invention is further directed to a method for the production of concrete, said method comprising the step of :
- providing a mixture comprising hydraulic cementitious material and the above described coated aggregates; and
- mixing said mixture with water.

### Figures

The invention will now be further described with reference to the Figures in which:
- Figure 1:: is a pictorial representation of the results of the "four-point" bending tests described in the Example 1 and in which the dark black curve represents baseline mix (1), the curve with hollow square points represents control mix (2), and the light grey curve represents test mix (3) and;
- Figure 2:: is a pictorial representation of the results of the "four-point" bending tests described in the Example 2 and in which the black curve represents baseline mix (a), and the grey curve represents test mix (b).

### Specific Description

There is provided a concrete mix comprising hydraulic cementitious material, aggregates and water, in which at least a portion of the aggregates in the total mix are coated externally with a well-bonded polymer layer of at least 1 µm in thickness and wherein the polymer layer has a high elongation and high energy absorption capacity at the temperatures at which the concrete is designed to be used.

The polymer coating thickness is generally in the range of 1 to 500 µm, with 10 to 100 µm being the preferred range.

The range of aggregates sizes used in the mix which are to be coated, and the mass fraction of aggregates to be coated, depend on the top size of the aggregates to be used in the concrete in question. It represents a significant percentage of the coarsest fraction of these aggregates. It preferably represents at least 30% of the aggregates with effective diameters (or sieve sizes) that are above 50% of the maximum aggregate diameter, and even more preferably, at least 50% of those aggregates with effective diameters (or sieve sizes) larger than 75% of the maximum aggregate diameter.

The cementitious material is usually of an inorganic nature, with the ability to set and harden in the presence of water at temperatures in the range 0-100°C. Portland cement and blends thereof are especially suitable ; those blends can be further defined as including Portland Blast furnace Cement, Portland Fly Ash Cement, Portland Pozzolan Cement, Portland Silica Fume cement, Masonry Cements, Expansive Cements, White blended cements and Colored cements.

Non-Portland hydraulic cements are also suitable and may include Pozzolan-lime cements, Slag-lime cements, Supersulfated cements, Calcium aluminate cements, Calcium sulfoaluminate cements, Calcium Phosphate cements, Magnesium phosphate cements, and Magnesium oxide cements. "Natural" cements such as those produced by burning argillaceous limestones at moderate temperatures, and geopolymer cements made from mixtures of water-soluble alkali metal silicates and aluminosilicate mineral powders, such as fly ash or metakaolin, may also be used.

The cementitious material, usually present in the region of 5-20% by weight, is mixed with water to provide a paste to which is added an amount of aggregates, usually 60-90% by weight. Of that total amount of aggregates added, at least 30% of the coarsest fraction thereof is coated with the prescribed type of polymer. The aggregates may be in the form of sand, gravel, stone and the like.

Other admixtures can also be introduced to the mix if necessary or desired and are usually conventional chemical admixtures which are introduced in the form of powder or liquid at the cement mixing stage. As indicated previously such may include plasticizers, superplasticizers, accelerators, retarders, air-entrainers, pigments, corrosion inhibitors, bonding agents, pumping aids and the like which are usually added in an amount of less than 5% of the mass of cement. Such admixtures can be utilised for a number of reasons where necessary, such as accelerators which speed up the hydration (hardening) of the concrete. On the other hand retarders can be added to slow the hydration of concrete, and are used in large or difficult pours where partial setting before the pour is complete is undesirable. Air-entrainers can be utilised to add and distribute tiny air bubbles in the concrete, which assist in reducing damage during freeze-thaw cycles thereby increasing the concrete's durability. Plasticizers and superplasticizers can be used as water-reducing admixtures to increase the workability of the "fresh" concrete, allowing it to be placed more easily, with less consolidating effort, whilst corrosion inhibitors are used to minimize the corrosion of any steel and/or steel bars in the final concrete. Bonding agents can be used to create a bond between old and new concrete and the addition of pumping aids improves pumpability, thickens the cement paste, and reduces dewatering of the paste. For aesthetic purposes pigments can be introduced to the mix to change the color of the concrete.

The polymer with a high elongation and a high energy-absorption capacity used as the coating or basis for the coating on the aggregates is generally a water-dispersible polymer, such as a latex, or a rubber. The rubber can be either a natural rubber coming from trees or alternatively can be a synthetically produced rubber. Natural rubber is a polymer of isoprene. Synthetic rubbers can be made as a polymer of isoprene or various other monomers. Examples are SBR (styrene-butadiene rubber), butadiene rubber or EPDM (ethylene-propylene-diene rubber). However, use of other polymers having suitable properties is envisaged, such as styrene-acrylic copolymers.

Additional components may also be included in the polymer coating, such as plasticizers to increase its elastomeric properties, or cationic copolymers in order to improve its adhesion to certain aggregates surfaces. In choosing suitable polymers it is important that they are able to bond well both to the aggregates and the cement paste, and be capable of dissipating a large amount of energy during the opening or rupture of the interface. In order to achieve these objectives, the polymer should preferably have a tensile strength of more than 0.4 MPa but less than 8 MPa when tested as a film (following the methodology of ISO 1184 or DIN 53445) at the desired usage temperature of the finished concrete. Under these same test conditions, it should also preferably have an elongation at break of at least 500%, and even more preferably of at least 1000%.

It was found that the advantages of using the polymers described herein is that, unlike elastomeric fibres, as for example described in WO2006/027363, coated aggregates do not have a significant negative effect on concrete workability, thus allowing the resulting concretes to be placed easily without needing extra dispersants (superplasticizers) or additional vibration, etc. If a thin but very extensible and strongly-bonded polymer coating is used to link the paste to the aggregate, the coating will absorb a large amount of energy during crack opening, while, at the same time, ensuring that the crack passes around the aggregate even when the paste aggregate bond would normally be very strong. This is advantageous because it makes the concrete tougher (less brittle) and thus more resistant to visible cracking. Whereas, in the absence of such a coating, increasing the strength of a concrete generally tends to increase the paste-aggregate bond and thus make the concrete more brittle. By optimizing the coating thickness and the size range of the treated aggregates, relatively significant increases in concrete toughness are possible with conventional concrete aggregates while using very modest polymer volumes in the overall mixture. In fact, the amount of polymer needed is very small compared to the amounts required in conventional latex-modified concretes but provides concrete with substantially improved mechanical properties. Since such polymers are generally very expensive (per unit volume) compared to the other ingredients in concrete reducing the amount needed for the desired performance is highly advantageous.

The aggregates coating may be carried out in a simple agitator, as in the examples, but it may also be carried out in a fluidized-air-bed, or by agitating the aggregates in a turbine combined with an integrated pulverization system.

### Examples

The invention will now be further illustrated with reference to the following non-exclusive examples.

### Example 1

Conventional acrylic latex (BASF Acronal 400) was used to coat the larger particles of a commonly-used limestone coarse aggregate (obtained from Cassis quarry in France). The coated aggregates were those with a sieve size range from 6 to 10 mm (6/10). Once coated, they were utilised in the concrete mix shown in Table 1 below, in which the mass of polymer (and of other solid ingredients) is given on an anhydrous basis.

The aggregates coating was carried out in a "Turbula" agitator at room temperature. The liquid polymer dispersion was added to the aggregate and the subsequent continuous agitation for 30 minutes ensured that the coating formed an external film over the respective aggregate particles without significant agglomeration of the aggregates. The resulting coated aggregates were then dried in an oven at 105°C for 10 hours to fully cure the polymer film.

The same basic process was used to make three different concrete mixes for comparison:
(1) A baseline mix with no polymer added (and untreated aggregate);
(2) A "control" mix in which the aggregates were untreated, and which was identical in proportions to mix (1) except that 2% of latex (expressed as dry mass per mass of cement) was added along with the mix water.
(3) The test mix with the treated aggregates as described above, in which the total dry mass of latex coating the treated aggregates amounted to 2% by mass of the cement in the mix.

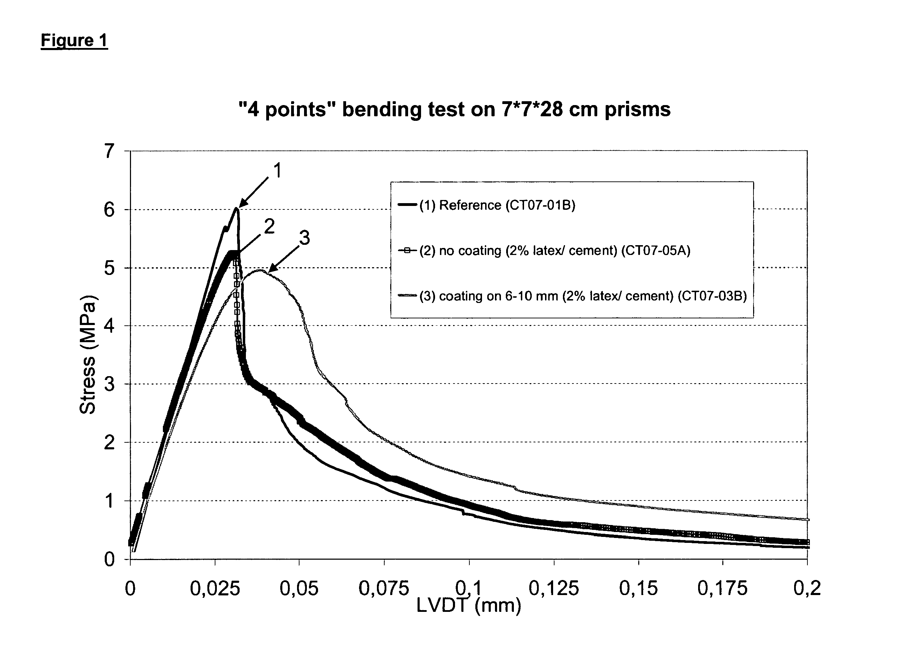

These mixes were used to cast 7*7*28cm concrete prisms, which were moist cured for 14 days before being tested in flexure while still wet. The results of the "four-point" bending tests are shown in Figure 1, in terms of flexural stress in MPa vs. elongation in mm and in which curves are given for two separate prisms of each type.

It can be seen clearly from Figure 1 that both the mixes which include latex, namely mixes (2) and (3), showed about a 20% lower peak load than the baseline mix without polymer (mix 1). However, the prisms made with the treated aggregates (mix 3) showed a much greater deflection after the peak, and the load dropped off much more slowly with increasing deflection than it did for either mix (1) or (2). This implies that the mix with the coated aggregates absorbed considerably more energy during rupture. It is envisaged that such an energy absorption process can be further optimised by suitable choices of polymer, polymer coating thickness, the size range of aggregates to be treated, etc.

Furthermore it was found that the workability of the fresh concrete produced by mixes (1) and (3) were essentially identical, whereas mix (2) was very stiff and relatively hard to place. This confirms that polymer latexes can often have a very negative effect on concrete rheology when dispersed in the mix water, and clearly shows the advantage of applying them first to the surfaces of the aggregates prior to the addition of the mix water.

### Example 2

The procedures followed were essentially identical to those of Example 1, except that in this case the coated aggregates were those with a sieve size range from 16 to 20 mm. Once coated and dried, they were utilised in the concrete mix shown in Table 2 below, in which the mass of polymer (and of other solid ingredients) is given on an anhydrous basis. The polymer dosage in this case was 1.1% by mass of cement.

The same basic process was used to make two concrete mixes for comparison:
(a) A baseline mix with untreated aggregates ; and
(b) The test mix with the treated aggregates as described above.

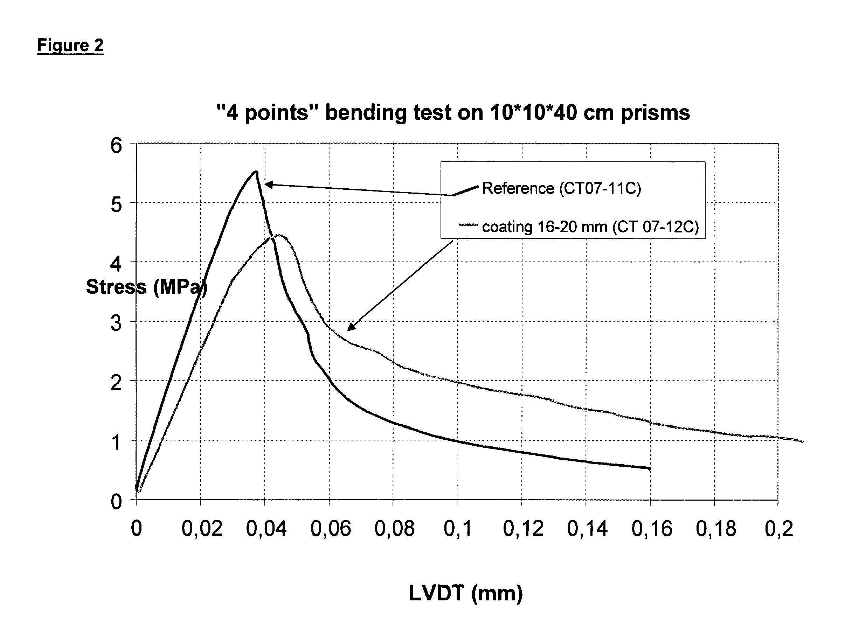

These mixes were used to cast 10*10*40cm concrete prisms, which were moist cured for 14 days before being tested in flexure while still wet. As in Example 1, it was found that the workabilities of the fresh concretes produced by mixes (a) and (b) were essentially identical. The results of the "four-point" bending tests are shown in Figure 2, in terms of flexural stress in MPa vs. elongation in mm and in which curves are the mean values of two separate prisms of each type. (Note that in both case the two curves for the same mix were almost identical, indicating good repeatability) The average curve for mix(a) is represented by the **black** line in the graph, whereas the average curve for mix (b) is represented by the **grey** line.

It can be seen clearly from Figure 2 that, similarly to the results of Example 1, the mix (mix b) which included latex-coated aggregates showed about a 20% lower peak load than the baseline mix without polymer (mix a). The prisms made with the treated aggregates (mix b) also showed a significantly greater deflection after the peak, and the load dropped off much more slowly with increasing deflection than it did for mixes (a). This confirms, in a concrete made with larger top size aggregates than in Example 1, that the mix with the coated aggregates absorbs considerably more energy during rupture.

A particularly surprising aspect of the invention is that it is possible to treat only a specific small fraction of the total aggregate (42% in Example 1 and 30% in Example 2,) in order to get greatly improved final concrete properties. Of course this is a great advantage to the concrete manufacturing industry due to the reduction in cost and increase in convenience that such an approach allows compared to other known approaches of making toughened concretes (e.g. adding fibres). It is also advantageous over the use of lightweight aggregates because lightweight aggregate concretes are generally both a lot more expensive and a lot weaker than normal weight concretes.

**TABLE 1**

| **Components** | **Kg/m3** | **Litres/m3** |
|---|---|---|
| ***Treated aggregates*** | | |
| **Cassis 6/10** | **682** | **258** |
| ***Fine aggregates*** | | |
| **Saint Bonnet 0/5/R** | **724** | **283** |
| **Cassis 3/6** | **232** | **88** |
| ***Cement*** | | |
| **Le Havre** | **375** | **119** |
| ***Limestone Filler*** | | |
| **BL200** | **83** | **32** |
| **Polymer** | | |
| **Acronal S400** | **7,5** | **7,5** |
| ***Total Water**** | **218** | **218** |
| ***Totals:*** | **2321** | **1005** |

| | | |
|---|---|---|
| * About 80g of water was used to prewet the aggregates before mixing | | |

**TABLE 2**

| **COMPONENTS** | **kg/m³** | **Litres/m³** |
|---|---|---|
| **Treated aggregates** : Cassis 16-20mm | 501 | 109.7 |
| **Aggregates** : Cassis 10-16mm | 294 | 186.9 |
| **Aggregates** : Saint-Bonnet 5-10mm | 116 | 45.5 |
| **Fine aggregates** : Saint-Bonnet 0/5/R | 746 | 292.5 |
| **Cement**: Le Havre | 403 | 127.9 |
| **Limestone filler** : BL 200 | 84 | 32.2 |
| **Polymer Acronal*:** S400 | 4.5 | 4.5 |
| **Total Water** | 209.5 | 209.5 |
| **TOTALS** | **2358** | **1008** |

## Claims

1. A concrete mix comprising hydraulic cementitious material, aggregates and water, wherein at least a portion of the aggregates in the total mix is coated externally with a well-bonded polymer layer of at least 1 µm in average thickness, said layer comprising a polymer having a high elongation and high energy-absorption capacity at the temperatures at which the concrete is designed to be used.

2. A concrete mix according to claim 1 wherein the average polymer coating thickness on the coated aggregates is from 1 to 500 µm.

3. A concrete mix according to claim 1 wherein the average polymer coating thickness on the coated aggregates is from 10 to 100 µm.

4. A concrete mix according to any one of the preceding claims wherein the cementitious material is selected from any one or more of Portland cements, blends of Portland cements having supplementary cementitious materials, non-Portland hydraulic cements and alkali-activated inorganic binders.

5. A concrete mix according to claim 4 wherein the supplementary cementitious materials include one or more of granulated blast-furnace slags, fly ashes, pozzolans and limestones.

6. A concrete mix according to claim 4 wherein the non-Portland hydraulic cements are selected from Pozzolan-lime cements, supersulfated slag cements, slag-lime cements, calcium aluminate cements, calcium sulfoaluminate cements, magnesium phosphate cements, calcium phosphate cements, magnesium oxide cements, and gypsum plasters.

7. A concrete mix according to any one of the preceding claims wherein the cementitious material is present in an amount of 5-20% by weight of total mix.

8. A concrete mix according to any one of the preceding claims wherein the aggregates are selected from the group consisting of sand, gravel, crushed stone and recycled aggregates.

9. A concrete mix according to any one of the preceding claims wherein the aggregates are present in an amount of 60-90% by weight of total mix.

10. A concrete mix according to claim 9 wherein at least 30% of the total aggregates in the mix are coated with a polymer layer.

11. A concrete mix according to any one of the preceding claims wherein the mix further comprises admixtures or additives selected from plasticizers, superplasticizers, accelerators, retarders, air-entrainers, pigments, corrosion inhibitors, bonding agents and pumping aids.

12. A concrete mix according to claim 11 wherein the admixtures or additives are present in an amount of less than 5% of the mass of cement.

13. A concrete mix according to any one of the preceding claims wherein the polymer is a water-dispersible polymer having an elongation capacity of at least 500%.

14. A concrete mix according to claim 13 wherein the polymer is a water-dispersible polymer having an elongation capacity of at least 1000%.

15. A concrete mix according to claims 13 or 14 wherein the polymer has a tensile strength in the range of 0.4MPa to 8MPa.

16. A concrete mix according to any one of the preceding claims wherein the polymer comprises latex, natural rubber, synthetic rubber and/or constituents thereof.

17. A concrete mix according to any one of the preceding claims wherein the rubber is a form of isoprene including SBR (styrene-butadiene rubber), butadiene rubber or EPDM (ethylene-propylene-diene rubber).

18. A concrete mix according to claims 1 to 15 wherein the polymer comprises styrene-acrylic copolymers.

19. A concrete mix according to any one of the preceding claims wherein the polymer coating comprises additional components selected from one or more of cross-linking agents, coupling agents and plasticizing agents.

20. A concrete mix according to any one of the preceding claims wherein the concrete mix additionally comprises reinforcing means selected from steel, glass, synthetic or natural fibres.

21. Use of the coated aggregates as described in anyone of the preceding claims in the production of concrete.

22. A method for the production of concrete, said method comprising the step of :
- providing a mixture comprising hydraulic cementitious material and coated aggregates as described in anyone of claims 1 to 20; and
- mixing said mixture with water.
